# EUROPEAN PATENT APPLICATION

(11) **EP 2 810 922 A1**
(43) Date of publication of application: **10.12.2014**
(21) Application number: 13305761.2
(22) Date of filing: 06.06.2013
(51) Int. Cl.: C02F 1/469, C02F 1/46, C02F 103/08, C02F 1/461

(54) **Method and device to remove ions from an electrolytic media, such as water desalination, using suspension of divided materials in a flow capacitor**

(71) Applicant: Centre National de la Recherche Scientifique, 75016 Paris (FR); Université Paul Sabatier (Toulouse III), 31062 Toulouse Cedex 9 (FR)
(72) Inventor: Simon, Patrice, 31500 Toulouse (FR); Taberna, Pierre-Louis, 31750 Escalquens (FR); Daffos, Barbara, 31400 Toulouse (FR); Iwama, Etsuro, 31520 Ramonville Saint-Agne (FR); Tzedakis, Theodore, 31400 Toulouse (FR); Gogotsi, Yury, Ivyland, PA Pennsylvania 18974 (US); Hatzell, Kelsey, Philadelphia, PA Pennsylvania 19104 (US); Gogotsi, Oleksiy, 03680 Kiev (UA)
(74) Representative: Reboussin, Yohann Mickaël Noël

(57) **Abstract**

An object of the present invention is to provide a cheap and efficient method and device to remove ions from an electrolytic media, such as water desalination.

The invention relates to a cell adapted to remove ions from an liquid electrolytic media, comprising a housing (10) with:
• two inlets (11) and two outlets (12),
• a unique porous membrane (13) ionically conducting but electrically insulating, lying between the two inlets and the two outlets to constitute two compartments, each one comprising one of the inlets and one of the outlets,
• two electrodes, each one in electronic contact with one compartment.

## Description

The invention relates to a method and a device to remove ions from an electrolytic media using suspension of divided materials in a flow capacitor.

The present invention aims to provide an electrochemical system to remove ions from an electrolytic media. An example is the removal of chlorine and sodium ions from salted or brackish water to transform into drinkable water.

Many countries do not have sufficient water resources to sustain agriculture and economic development, and approximately one billion people lack access to safe drinking water. Other applications could concerns the recovery of valuable or noxious ions from a complex electrolytic mixture and finely purification of various neutral molecules (biological, food, etc.) from electrolytic solutions.

Nowadays, water desalination can be done by using several techniques: Membrane-based reverse osmosis (RO) or thermal-based multistage flash (MSF) and multi-effect distillation (MED) constitute over 90% of the global desalination capacity.

The main barriers to expanding desalination technologies around the world are energy and infrastructure costs, which preclude the economical production and distribution of clean water. Energy costs range from 3.6-5.7 kWh for RO, 23.9- 96 kWh for MSF, and 26.4-36.7 kWh for MED per cubic meter of clean water produced which includes pre-treatment, brine disposal, and water transport.

Seawater reverse osmosis (SWRO) is currently the technology of choice for desalination. Significant decreases in energy consumption have been realized as a result of technological improvements including but not limited to: high permeable membranes, energy recovery devices, and efficient pumps.

Thermodynamically the minimum amount of energy needed to extract salt from water, regardless of the process or system, can be derived from Gibbs free energy of mixing. For seawater, at approximately 35,000 parts per million (ppm) salt and assuming a 50% recovery (typical of current systems), this yields an energy consumption of 1.06 kWh/m³. The best RO processes have recently demonstrated energy consumption on the order of ∼2 kWh/m³. Thus, the margin for energy improvement is small, and further motivates the need for new systems designs that are built upon inexpensive materials and architectures that have long lifetimes.

Beside the RO technique that uses pressure to split the salt and pure water, other techniques have been developed, using application of a potential; these are called Charged-based desalination techniques.

The first charge-based technique appeared in 1953 and is called the Electrodialysis (ED). The salted electrolyte is placed between two electrodes and an electric field is applied. Semi-permeable membranes are placed between the electrodes; one is selective for Na⁺ ions (only allows migration of Na+ ions) and the other one selective to Cl⁻ ions. Although promising for low salinity water where RO is less efficient, this technology suffers from the high cost of the selective membranes, which may explain why this technology only represents about 6% of the installed desalination units.

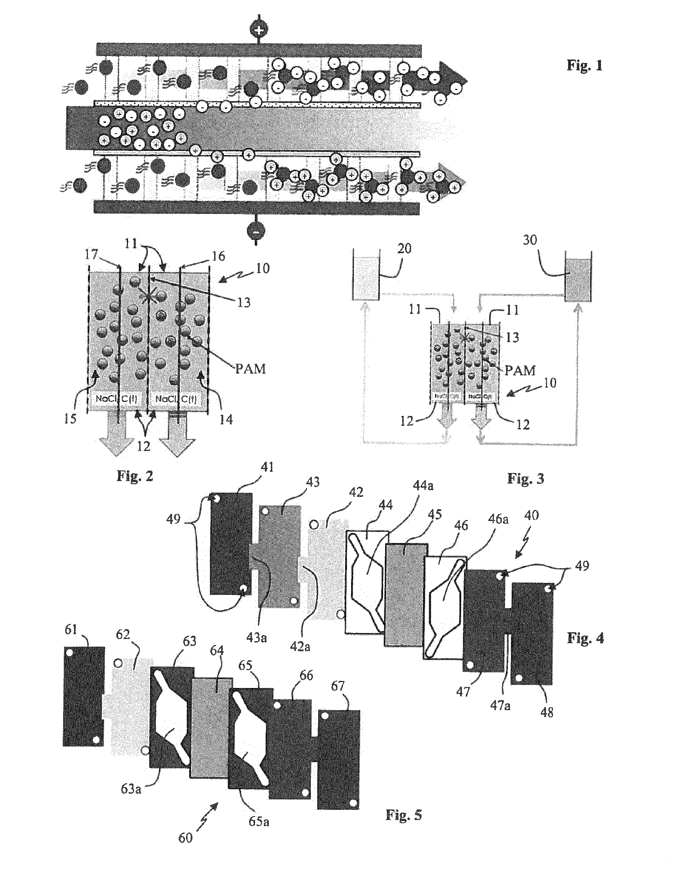

A new charge-based desalination technique has been developed for tens of years: the Capacitive De-lonisation (CDI). In that system, ions are electrochemically adsorbed on high surface area electrodes under polarization. The salted water flows between two electrodes coated with high surface area materials like carbon. Upon polarization, cations migrate to the cathode and anions to the anode where they are adsorbed inside the pores of the carbon (see Figure 3). This technology is issued from the Electrochemical Capacitor (Supercapacitor) technology and has gained a lot of benefits from parallel improvements in supercapacitor electrodes. This process is interesting since it uses simple ion adsorption under electric field (no membrane) and inexpensive materials like carbons. Moreover, a part of the energy used to charge the capacitor can be recovered during discharge (removal of sodium and chlorine ions from the carbon). Thus, it has the potential to be highly efficient, especially for low salt concentration feedwater, such as brackish water.

The main drawback is that for high salinity feedwater, the capacitance of the electrodes becomes a limiting factor and the use of CDI for desalination becomes uneconomical. This last point is crucial since it is related to the finite amount of ions the porous carbon can adsorb per gram (about 150 F/g, that is 120 C per gram for a cell voltage of 0.8 V). As a result, a carbon film coated onto a current collector will not have the capacity to remove more than about 120 C per gram of carbon, considering an operating voltage of 0.8V. Desalination of highly concentrated salted water could not be obtained using films of less than hundreds of microns thickness, which is a conventional active film thickness that can be used. The large ohmic drops associated with the use of thicker films of tens of millimeters would drastically limit the performance in terms of energy efficiency and desalination capacity.

Very recently, another solution was proposed by Jeon et al. (see Energy and Environmental Science 2013, doi: 10.1039/c0xx00000x and D.K. Kim, T.H. Kim, C.H. Cho, J.G. Yeo, PCT Patent n°PCT-KR2011-006010, 2011)). They use a flow capacitor, originally described by Gogotsi et al. (Y. Gogotsi. V. Presser, C. Kumbur, Electrochemical Flow Capacitors, PCT/US2012/024960, February 14, 2012; and Advanced Energy Materials 2012, 2, 895-902).

As it can be seen in figure 1, representing this state of art, they use a suspension of porous carbon flowing between two electrodes (positive and negative plates, which are electronically conducting), also named as "current collectors", together with two ion-exchange membranes (one at each polarity); the salted water to be purified flows between the membranes and is not mixed with the carbon suspension. Cations are exchanged at the negative electrode by crossing the ion-exchange membrane and anions are exchanged at the positive electrode by crossing the ion-exchange membrane. Then, cations (sodium) and anions (chlorine) are adsorbed at the carbon suspension continuously flowing.

There are two primary advantages to this system: (1) it has a theoretical unlimited capacitance (as far as the carbon is removed) due to the flowing nature of the electrodes, and (2) it negates the need for a periodic charge desorption steps (ion release).

However, the main drawbacks are i) a slow ion exchange rate between the two membranes that limits the desalination rate, ii) the large distance between the two electrodes since the water must flow between the membranes, which leads to an important resistance and decreases the electrical efficiency.

An object of the present invention is to provide a cheap and efficient method and device to remove ions from an electrolytic media, such as water desalination.

The invention, fully detailed in this description, is based on the idea of mixing the carbon and the electrolytic media, i.e. salted water, and flowing the suspension in a device of which compartments are separated by one unique porous membrane ionically conducting but electrically insulating (possibly but not necessary ion-exchange membranes).

The invention relates to a cell adapted to remove ions from an liquid electrolytic media, comprising a housing with:
- two inlets and two outlets,
- a unique porous membrane ionically conducting but electrically insulating, lying between the two inlets and the two outlets to constitute two compartments, each one comprising one of the inlets and one of the outlets,
- two electrodes, each one in electronic contact with one compartment.

According to other embodiments:
- the cell may be composed by a stack of :
   - a first external silicon layer,
   - an housing constituted by:
      ○ a first electrode;
      ○ a first compartment layer with at least one opening constituting, in use, a first compartment,
      ○ a polyvinylidene difluoride based membrane, ionically conducting but electrically insulating,
      ○ a second compartment layer with at least one opening constituting, in use, a second compartment,
      ○ a second electrode,
   - a second external silicon layer.
- the first electrode may be in a material chosen in the group consisting of:
   ○ foils or plates or grids in Platinum, Titanium, stainless steel, stainless steel 316L, graphite, diamond, boron-doped diamond
   ○ expanded foils compacted with graphite, and
   ○ Dimensionally Stable Anodes (DSA).
- the compartment layers may be in a material chosen in the group consisting in Polytetrafluoroethylene and Silicon; and
- the second electrode may be a stainless steel 304 plate.
- each compartment may comprise one or more channels in order to enhance, during use, the contact surface between the electrodes and the liquid electrolytic media;
- each electrode may be a metallic plate with a micro or macro structured surface in order to enhance, during use, the contact surface between the electrodes and the liquid electrolytic media;
- the cell may comprise additional electronic collectors each electrically linked to one of the electrodes, selected from the group consisting of metallic grids, metal granules, spheres, rings and springs, inserted into the compartments in order to enhance, during use, the contact surface between the electrodes and the liquid electrolytic media.

The invention also relates to a system to remove ions from an liquid electrolytic media, comprising:
- at least one cell according to the invention;
- at least one upstream tank for the electrolytic media charged with ions and a porous active material mixed with the electrolytic media, and linked to the inlets of the cell,
- at least one pump to generate a flow of the electrolytic media according to a flow direction from the upstream tank to the cell,
- at least one downstream fluidic circuit, linked to the outlets of the cell, to drive the electrolytic media flowing from the cell to a downstream tank or to recycle the electrolytic media flowing from the cell towards the upstream tank,
- at least on source of electrical energy linked to the electrodes to generate an electrical current between the electrodes.

According to other embodiments:
- the system may comprise:
   - at least one cell according to the invention;
   - at least one upstream tank for the electrolytic media charged with ions and a porous active material mixed with the electrolytic media, and linked to the inlets of the cell,
   - at least one downstream tank, linked to the outlets of the cell, to receive the electrolytic media flowing from the cell,
   - at least one pump to generate a flow of the electrolytic media according to a flow direction from the upstream tank to the downstream tank through the cell,
   - at least on source of electrical energy linked to the electrodes to generate an electrical current between the electrodes;
- the cell may be supported by a support;
- the support of the cell, the upstream tank and the downstream tank may be mounted on a pivotally frame, and the pump is reversible in order to reverse the flow direction;
- the porous active material may be selected from the group consisting in activated carbon, nanotubes of carbon and Carbide Derived Carbons.

The invention also relates to a method to remove ions from a liquid electrolytic media, comprising the following steps:
(a) providing a system according to the invention;
(b) filling the upstream tank with the liquid electrolytic media;
(c) mixing free of ion porous active material with the liquid electrolytic media to obtain a mixture;
   the order of steps (b) and (c) being invertible;
(d) generating a flow of the mixture from the upstream tank to the cell,
(e) applying a tension, a current or an electrical power between the two electrodes of the cell to remove ions from the liquid electrolytic media of the mixture by adsorption of the ions on the porous active material,
(f) generating a flow of the mixture from the cell to the downstream fluidic circuit,
(h) filtrating of the mixture to separate the porous active material adsorbed with ions from the liquid electrolytic media.

According to other embodiments:
- the method may further comprise the steps of (i) mixing the porous active material adsorbed with ions obtained in step (h) in a second liquid electrolytic media to obtain a second mixture, (j) flowing the second mixture obtained in step (i) in a second cell according to anyone of claim 1 to 6, and (k) recovering some electrical energy generated by spontaneous discharge of the porous active material, via two electrodes of the second cell;
- steps (d) and (e) may be performed concomitantly to carry out a continuous removing of ions, or sequentially to carry out an intermittent removing of ions;
- the method may further comprise a step (g), between step (f) and step (h), of recycling the mixture comprised in the downstream tank to the upstream tank, and of performing steps (d) to (f) until the liquid electrolytic media have an ion concentration less than or equal to a fixed threshold value;
- in step (e), the tension, the current or the electrical power may be applied continuously or in a pulsed manner.

The accompanying drawings, which are included to provide a further understanding of the invention and to illustrate embodiments of the invention together with the description, serve to explain the principle of the invention. In the drawings:
FIG. 1 is a schematic view illustrating the state of art;
FIG. 2 and 3 are schematic views illustrating a first embodiment of a cell and a system according to the invention;
FIG. 4 and 5 are exploded schematic views illustrating two embodiments of a cell according to the invention;
FIG. 6 is a schematic front view illustrating a layer constituting a compartment of a cell according to the invention;
FIG. 7 is a schematic front view illustrating a part of a support of a cell according to the invention;
FIG. 8 is a diagram of cyclic voltammetry experiment performed with a cell according to the invention in intermittent mode;
FIG. 9 and 10 are diagrams of chronoamperometry experiments performed with a cell according to the invention in intermittent mode;
FIG. 11 is a diagram of cyclic voltammetry experiment performed with a cell according to the invention in continuous mode;
FIG. 12 is a diagram of chronoamperometry experiment performed with a cell according to the invention in continuous mode;
FIG. 13 is a schematic perspective transversal view illustrating an embodiment of cell according to the invention; and
FIG. 14 and 15 are schematic views of two embodiments of a system according to the invention;

In the present invention, carbon suspension is directly put in contact with the salted water to be treated. Figure 2 is a schematic view of a general embodiment of a cell according to the invention, and Figure 3 is a schematic view of a whole system according to the invention, including an anolyte and a catholyte tanks.

A cell according to the invention comprises a housing 10 with:
- two inlets 11 and two outlets 12,
- a unique porous membrane 13 ionically conducting but electrically insulating, lying between the two inlets and the two outlets to constitute two compartments 14-15, each one comprising one of the inlets and one of the outlets,
- two electrodes 16-17, each one being in electronic contact with one compartment.

As illustrated in figure 3, this cell is comprised in a system to remove ions from a liquid electrolytic media, further comprising:
- two upstream tanks 20 for the electrolytic media charged with ions and a porous active material PAM mixed with the electrolytic media, and linked to the inlets 11 of the cell,
- at least one pump (not shown) to generate a flow through the cell of the electrolytic media according from the upstream tank,
- at least one downstream fluidic circuit, linked to the outlets 12 of the cell, to recycle the electrolytic media flowing from the cell towards the upstream tank. Alternatively, the system may comprise downstream tank(s) where the electrolytic media is driven by the downstream fluidic circuit.

The system also comprise at least on source of electrical energy (not shown) linked to the electrodes to generate an electrical current between the electrodes.

The porous active material may be activated carbon, nanotubes of carbon, Carbide Derived Carbons, or others.

The porous active material must meet the following conditions:
- it must be an electronic conductors in order to be polarized
- it must have a specific surface area (m² / g) as important as possible to be able to adsorb the more possible ions, while having a pore size suitable to allow ions to enter the porous material;
- it must be electrochemically stable in the range of the studied potentials.

Furthermore, for an application in desalinization, the porous active material should preferably be low cost.

All these conditions are met by the carbon, which comes in different forms:
0 dimension (0D) as carbon onions,
1 dimension (1 D) as carbon nanotubes,
2 dimensions (2D) as graphite and graphene or
3 dimensions (3D) as porous carbon (activated carbons, carbide derived carbon or CDC, etc.).

In other words, all carbon based material with a surface area between 100 and 3500 m² / g could be used, provided that it complies with the others previously mentioned conditions.

A cheap oxide with large area and electrochemically stable could be used as well.

The method to remove ions from a liquid electrolytic media according to the invention comprises the following steps:
(a) providing the previous system;
(b) filling the upstream tank with the liquid electrolytic media;
(c) mixing free of ion porous active material with the liquid electrolytic media to obtain a mixture;
   the order of steps (b) and (c) being invertible;
(d) generating a flow of the mixture from the upstream tank to the cell,
(e) applying a tension, a current or an electrical power between the two electrodes of the cell to remove ions from the liquid electrolytic media of the mixture by adsorption of the ions on the porous active material,
(f) generating a flow of the mixture from the cell to the downstream fluidic circuit,
(h) filtrating of the mixture to separate the porous active material adsorbed with ions from the liquid electrolytic media.

In step (e), the tension, the current or the electrical power may be applied continuously or in a pulsed manner.

Upon polarization of the electrodes, porous particles (like carbon for example) are charged positively in the anolyte and negatively in the catholyte when entering in contact with electrodes (current collectors) lying in the compartments. Ion adsorption then occurs inside the porous carbon particle in suspension.

Because of the polarization negatively charged ions are attracted by electrode +, and positively charged ions are attracted by electrode -. The separator between the two compartments (the porous membrane ionically conducting but electrically insulating) only allows ion transfers, but stops porous carbon particles. The result is that ions adsorption occurs on polarized porous carbon particles which trap them in each compartment. The ion concentration thus decreases in the liquid electrolytic media until or less than a fixed threshold value.

In this embodiment, the amount of active material (carbon) present in the suspension is greater than what can be achieved in traditional capacitive deionization systems based on film electrodes, since it depends 1) on the volume of the storage tank, and 2) on the mass content of porous carbon active material in the suspension which can reach about 300 g of carbon per liter of salted water. Moreover, the porous carbon can be continuously removed from the suspension by filtration and replaced with fresh carbon powder, or discharged in a stream of saltwater (release anions and cations) to recover energy. This has the great advantages of solving the problem of both the limitation in the capacitive adsorption in the conventional CDI process using films coated at the surface of electrodes, and secondly to significantly reduce the energy consumption.

This porous carbon saturated with sodium and chloride ions can be placed in another flow cell to be discharged in salt water, to i) recover regenerated carbon powder and 2) recover some of electrical energy by spontaneous discharge of the cell.

To this end, the method according to the invention further comprises the steps of (i) mixing the porous active material adsorbed with ions obtained in step (h) in a second liquid electrolytic media to obtain a second mixture, (j) flowing the second mixture obtained in step (i) in a second cell according to the invention, and (k) recovering some electrical energy generated by spontaneous discharge of the porous active material, via two electrodes of the second cell.

Depending on the structure of the cell, the system can be operated under continuous or intermittent flow conditions. In the case of a continuous flow, several passes can be made to fully remove the salt from water. In the case of an intermittent flow, the operating parameters (current, voltage, residence time, etc.) are defined so that all the carbon particles are fully charged with NaCl.

To this end, steps (d) and (e) of the method according to the invention are performed concomitantly to carry out a continuous removing of ions, or sequentially to carry out an intermittent removing of ions

The advantage versus the paper published by Gogotsi et al. (Advanced Energy Materials 2012, 2, 895-902 are as follows:
1) the cell is used and specifically adapted (reduction of distance between the electrolyte and the electrodes) for water desalination.
2) There are 2 electrolyte/suspension tanks that allow the continuous treatment of the suspension. It means that all the volume of suspension can be treated several times in the cell without the need of removing/cleaning the carbon suspensions.

The advantage versus the state of art of figure 1 (Jeon et al. in Energy and Environmental Science 2013, doi: 10.1039/c0xx00000x and the patent application by D.K. Kim, T.H. Kim, C.H. Cho, J.G. Yeo, PCT Patent n°PCT-KR2011-006010, 2011) are as follows:
1) The water to be desalinated and the carbon suspension are mixed together. This allows direct desalination of the water by polarization and not by diffusion that is a slower process.
2) There is no need for using ion-exchange membranes that are very expensive.

Figure 4 shows an exploded schematic view of a second embodiment of a flow capacitor cell 40 for water desalination according to the invention. The cell is composed by a stack of :
- a first external silicon layer 41,
- an housing constituted by:
   ○ a first electrode 42, such as a Platinum foil 42 layered with a Platinum-coated titanium plate 43;
   ○ a first compartment layer 44 in Polytetrafluoroethylene with at least one opening 44a constituting, in use, a first compartment,
   ○ a polyvinylidene difluoride based membrane 45, ionically conducting but electrically insulating,
   ○ a second compartment layer 46 in Polytetrafluoroethylene with at least one opening 46a constituting, in use, a second compartment,
   ○ a second electrode 47, such as a Stainless steel 304 plate,
- a second external silicon layer 48.

The material of the first electrode 42 in contact with the salted water is chosen in any material that can resist to the oxidation of the salted water during positive polarization (as a positive electrode).

Preferably, the material of the first electrode 42 is taken in the group consisting of Platinum, Titanium, Stainless steel 316L foils or plates or grids, graphite foils or plates or grids, stainless steel foils or plates or grids, expanded foils compacted with graphite (graphite-supported steel grids or foils or plates), diamond or boron-doped diamond; it may also be Dimensionally Stable Anodes (DSA).

If the first electrode 42 is a foil (for example in Platinum), it must be layered with a holder 43 (for example a Platinum-coated titanium plate which is a titanium plate coated with platinum). The holder 43 aims to re-enforce the mechanical properties of the foil 43 which is the positive electrode as such because it has a direct contact with the carbon suspension (mixed with NaCl solution).

The material of the second electrode 47 in contact with the salted water is chosen in any material that can resist to the reduction of the salted water as a negative electrode.

Preferably, the material of the second electrode 47 may be in Platinum, Titanium, Stainless steel, etc, in the form of foils or plates or grids.

As it can be seen on figure 4, the electrodes constituted, on one hand, by the Platinum-coated titanium plate 43 stacked against the Platinum foil 42 and, on the other hand, by the Stainless steel 304 plate 47, comprise projections 42a-43a-47a to facilitate an electrical link to the electrical circuit (not shown in the figures).

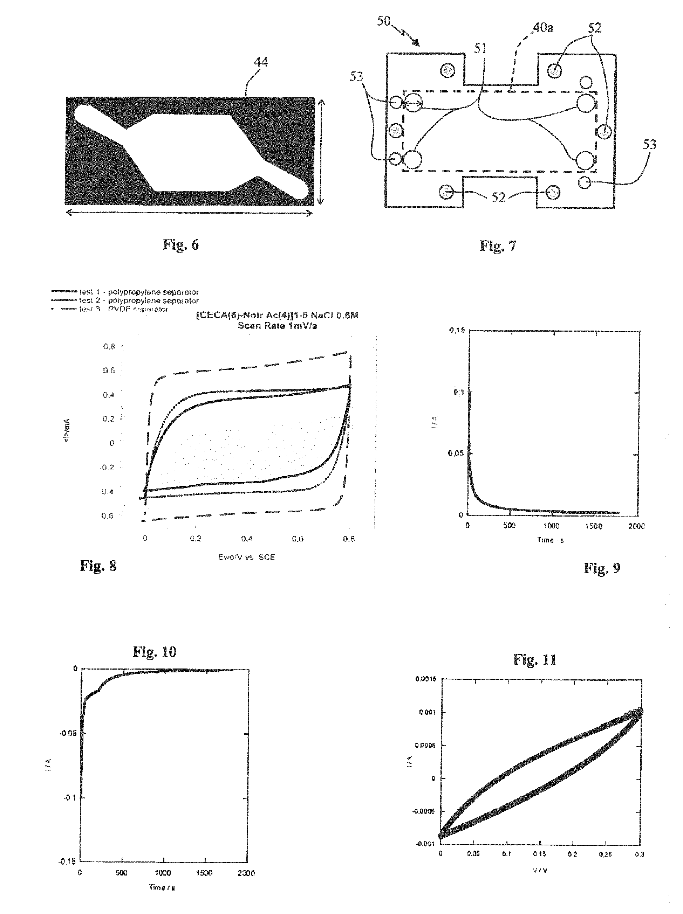

Furthermore, all the layers and plates stacked against each other comprise openings 49 placed in a manner to form the inlets and the outlets of the cell. These openings create, in use, a flow channel from the external layers to the compartments constituted by the openings of the Polytetrafluoroethylene layers (see figure 6).

In order to maintain all the layers and plates stacked against each other, the cell is supported by a support 50.

Figure 7 shows a part of a support according to the invention. It comprises two plates (only one is shown on figure 7) comprising first holes 51 in regard, in use, of the opening of the layers of the cell 40 (the lace of which is symbolized by a dashed line 40a) to form the flow channel, and second holes 52 for screws to tighten the cell.

The plates 50 may further comprise cell assembling guides 53 to ensure that the layers and plates are well aligned relative to each other.

As an example, the dimensions of the Polytetrafluoroethylene layer 44 are as follows:
Length: 95 mm
Width: 45 mm
Thickness: 2 mm
Diameter of holes 49: 8 mm.

As an example, the dimensions of the support 50 are as follows:
Length: 95 mm
Width: 45 mm
Diameter of holes 52: 7 mm.
Diameter of guides 53: 6 mm.

Figure 5 shows an exploded schematic view of a third embodiment 60 of a flow capacitor cell for water desalination according to the invention. The cell is composed by a stack of :
- a first external silicon layer 61,
- an housing constituted by:
   ○ a first electrode 62 in platinum foil;
   ○ a first compartment layer 63 in Silicon with at least one opening constituting, in use, a first compartment,
   ○ a polyvinylidene difluoride based membrane 64, ionically conducting but electrically insulating,
   ○ a second compartment layer 65 in Silicon with at least one opening constituting, in use, a second compartment,
   ○ a second electrode 66 in Stainless steel 304 plate,
- a second external silicon layer 67.

The Platinum foil 62 may be replaced by any material that can resist to the oxydation of the salted water (as a positive electrode). It may be a Titanium plate coated with Platinum, or cheaper, a Stainless steel 316L plate.

As in the second embodiment of figure 4, the electrodes 62-66 comprise projections for electrical connection, and holes to create, in use, the inlets and the outlets.

Each compartment of the cell may be constituted by one or more channels of various depth (in the range from 0.5 to 50 mm, and preferably, to limit the ohmic drop, in the range from 0,5 to 10 mm) and width in order to enhance, during use, the contact surface between the electrodes and the liquid electrolytic media

Each electrode may be a metallic plate with a micro or macro structured surface in order to enhance, during use, the contact surface between the electrodes and the liquid electrolytic media.

Various additional electronic collectors (metallic grids, metal granules, spheres, rings, springs, not limited) can be inserted (immobilized, percolated or semi-fluidized, not limited) into the electrolytic compartment as a function of its thickness, in order to create better electronic percolation and to enhance, during use, the contact surface between the electrodes and the liquid electrolytic media.

Figures 8 to 10 show the results of tests (Cyclic voltammetry in figure 8, chronoamperometry in figures 9 and 10) performed with a cell according to figure 4, used without circulation (intermittent mode). The cell has been performed using porous carbon (activated carbon from the CECA company, microporous, 1500 m²/g) in suspension in salted water. The carbon suspension contains 60% activated carbon and 40% of conducting acetylene black. The suspension contains 1 part of solid phase and 6 parts of liquid NaCl 0.6M phase.

Cyclic voltammetry (CV) has been carried out with this cell between 0 and 0.8V at a scan rate of 1 mV/s.

In figure 8, different porous membranes were tested and the best results were obtained using PCDF-based membranes. In that case in one pass, at 1 mV/s, 3.10⁻⁶ mole of NaCl are removed from the electrolyte, considering the amount of charge passed during the CV. The total amount of NaCl present in the cell is 4.5.10⁻⁵ mole. In a first approximation, under flow conditions, about 15 passes of carbon suspension are required to entirely remove the NaCl. In that case, the carbon suspension could be either i) discharged in a new solution of brackish water to clean the carbon (and to recover energy) or ii) filtered and replaced with "fresh" carbon (it means carbon which is free of ions) that could be obtained, for example, as well from spontaneous discharge in a second electrochemical device). Note that the ohmic drop is very small because of the used structure (activated carbon in suspension in the salted water and not separated from the salted suspension as in figure 1, thin compartments).

Figure 9 shows an example of potentiostatic experiment using the cell of figure 4 with the same suspension composition (1 part of solid phase [activated carbon (6) - acetylene black (4)] and 6 parts of liquid phase (NaCl, 0.6M) mixed together). The cell voltage was kept below water electrolysis, i.e. at 0.8V. The current decrease is related to the ion (Na,Cl) adsorption at the porous carbon present in the electrolyte. The toal charge calculated from the intregation of the plot is 11.1C. However, since there is a residual steady-state current with is linked with parasitic reactions (small amount of water oxidation for instance) that cannot be counted for desalination, the cell has been discharged at 0V and the charge calculated from the current, I, vs time plot during discharge (see Figure 10).

Figure 10 illustrates Chrono-amperometry measurements in static mode, at 0V after full charge of the cell used in figure 8 and 10.

The current icrease is linked with Na and Cl desorption. Total charge delivered: 9.82 C. The current value was less than 100 µA.

This cell contains 1.383 cm³ of electrolyte + carbon, that is 1.298 cm³ of 0.6M Na,Cl solution (considering the carbon weight in the suspension). This leads to 7.79 10⁻⁴ mole of Na,Cl present in the cell. Considering the total charge delivered by the cell, 9.82 C, the number of moles of Na,Cl discharged (or removed) can be calculated as : 9.82 C /96500 C mol⁻¹ = 1.01 10⁻⁴ mole. It means that all the Na and Cl can be removed in seven passes.

Figure 11 show the results of cyclic voltammetry performed with a cell according to figure 4, used under circulation (continuous mode).

The cyclic voltammetry shows a charge / discharge profile, less pronounced than the nice capacitive behavior observed in fig. 8 because a lower electronic percolation of carbon particles, but confirming the possibility of flow desalination.

The cyclic voltammogram of figure 11 was obtained with a flow of 15 mL/s of a suspension containing 1 part of solid phase [activated carbon (6) and acetylene black (4)] and 6 parts of 0.6M NaCl solution.

Although this curve shows ohmic behavior, it exhibits a part of capacitive current, of which value (about 0.5 mA) is similar to this obtained without flow, consequently led to the same conclusions as previous e.g. 3.10⁻⁶ mole of NaCl are removed from the electrolyte during one residence time. Note that these conditions were very disadvantageous, both coverage ratio of the carbon (by NaCl) and capacitive current could increase for higher residence times in the electrolytic compartment.

Adapting the different parts of the cell (suspension, separator, flow rate, cell design, etc.) will improve the desalination efficiency. Adding a second electrochemical device allows, by the spontaneous discharge of the carbon) to produce part of required energy to recharge the carbon.

Increasing the surface area of the current collectors and connecting a large number of single cells in series or parallel allow significant quantities to be desalinized.

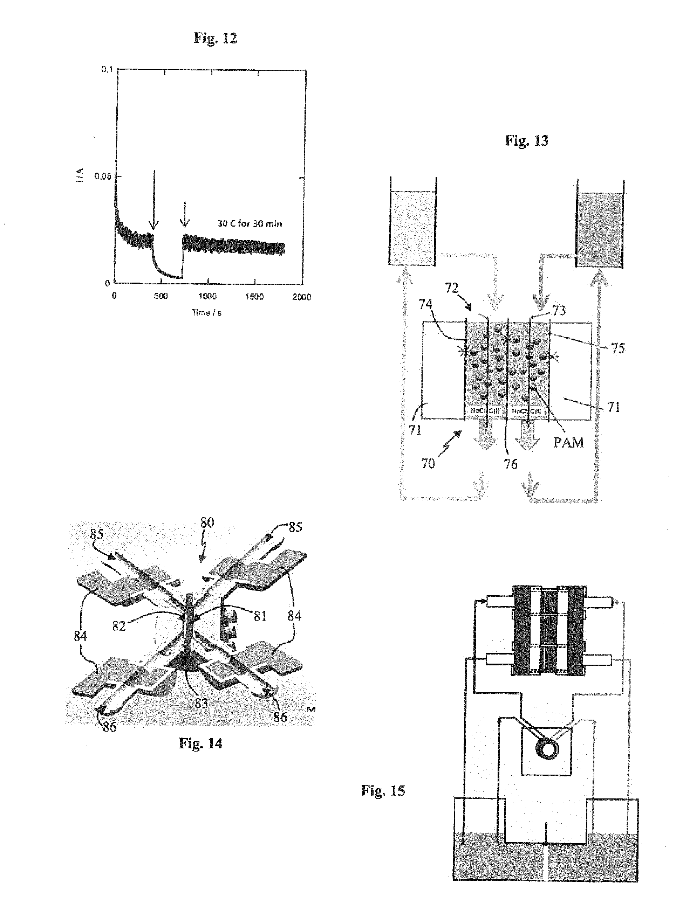

Figure 12 shows the current change vs time during a potentiostatic experiment, where the cell voltage was kept constant at 0.8V. The current decrease is linked with the Na and Cl adsorption; differently from static conditions, the steady-state current is also used for ion adsorption.

This chrono-amperometry was performed in continuous mode (15 mL/min) of a suspension containing 1 part of solid phase [activated carbon (6) and acetylene black (4)] and 6 parts of solution of 0.6M NaCl. The cell voltage was fixed at 0.8 V and the current recorded with time. The effect of the circulation can be seen on the current decrease when it is switched off. Total polarization time is 30 minutes.

Assuming that all the charge passed during the constant polarization at 0.8V (30C) was used for ion adsorption, the total amount of Na and Cl removed from the solution is 6.21 10⁻⁴ mole. The total amount of ions in the electrolyte is 3.92 10⁻² mole. It means that 30 hours of treatment would remove all the Na,Cl from the electrolyte if the carbon is replaced when fully charged. This is the demonstration that, with a non-optimized design, the desalination from suspension can be achieved.

Figure 13 shows a cell arrangement 70 where the solution 71 to be desalinated is partially not in direct contact with the suspension of activated carbon but separated from the anolyte 72 and catholyte 73 by a diaphragm 74-75. The diaphragm blocks the particle transfer from the anolyte/catholyte 72-73 into the solution 71 to be desalinated, but allows ion exchange.

Instead of a diaphragm, a porous membrane (mechanically stable and rigid, supported onto a rigid frame for instance) could also be used to accelerate the diffusion.

In that arrangement, the desalination is achieved by diffusion as long as the concentration in NaCl in the anolyte / catholyte [NaCl]cell is less than the concentration of NaCl in the solution to purify [NaCl]solution. This process is governed by the Fick 1^{st} law. However, the ohmic drop is small (and then the energy efficiency can be still high) since the distance between the anode and the cathode is kept small.

The anolyte 72 is separated from the catholyte 73 by a porous separator 76 (membrane, etc) that allows ion exchange but blocks porous particle cross-over. The suspensions flow in the cell and the particles become charged once they have touched the current collectors (electrodes) or another particle in connection with the collector, or any part of a micro structured collector. As a result, ion adsorption occurs to balance the charge inside the porous particle (carbon, for instance).

This solution offers the possibility to avoid systematic filtration of the suspension since the volume of brine that can be desalinated using a single suspension depends on the size of the storage tank. Of course filtration can be carried out in an external module.

Figure 14 shows a second example of a flow capacitor cell according to the invention for water desalination. The cell 80 contains two compartments 81-82, anolyte and catholyte, separated by a membrane 83. Both anolyte and catholyte flow in a channel. The parts 84 connected to the inlets 85 and outlets 86 contain servo-controllers for managing the flow rate and opening/closing of valves.

Anolyte (resp. catholyte) enters by one inlet of the cell and exit by one outlet, on the same side of the separating porous membrane. Diameter and length of the channels can be fine-tuned and adapted to the suspension to treat (viscosity, especially for suspensions containing high carbon concentrations, or other alimentary possibly non-Newtonian' fluids).

The entire system may comprise two tanks connected to the anolyte part and two tanks connected to the catholyte. Initially, the salted electrolyte + porous carbon suspensions are placed in the upper upstream tanks, on both the anolyte and catholyte sides. The circulation is achieved through pumps or equivalent (here a manual pump in the presented design). The cell can operate in intermittent mode or continuous mode, and the cell can be fixed or can be rotated.

Intermittent mode means that the cell stack is filled with the salted electrolyte +activated carbon suspension, then the flow is stopped. The polarization (constant current, constant voltage or sweep voltage or current) is applied in order to charge the cell (adsorption of ions in the porous carbon). Once the Na,Cl is removed from the electrolyte, the treated (de-salted water) is injected in the lower downstream tanks and a new volume of salted water is injected in the cell stack. Little by little, the lower downstream tanks are filled with de-salted water while the upper upstream tanks are getting empty. At the end of the process (once the entire electrolyte present in the upper tanks has been treated), the carbon suspension is separated from the electrolyte by sieving through a grid placed at the bottom of the lower tanks.

In the case of continuous mode, residence time and polarization and suspension formulation are calculated so that Na,Cl salt can be removed in one pass with appropriate porous carbon.

The invention provides the possibility of a rotating flow cell configuration (not illustrated)

In this configuration, the cell stack is replaced with 2 cells in parallel.

In this example, two cells are placed together. One is used for charging (desalination) and the other for discharging (carbon suspension cleaning).

In intermittent mode, the cell operates as described above except that, at the end of the treatment (when the upper tanks are empty), the treated water is removed from the lower tanks and the carbon containing the Na,Cl ions kept in the tanks. The whole cell + tank can be rotated upside down, the tanks containing the carbon full of Na,Cl being the upper ones and the empty tanks the lower ones.

To this end, the cell is supported by a support, and the support of the cell, the upstream tank and the downstream tank are mounted on a pivotally frame, and the pump is reversible in order to reverse the flow direction.

Salt water is injected in the upper tanks, in contact with the carbon charged with Na,Cl ions. The tanks are connected to the second cell and the suspension is discharged in the batch mode, thus allowing electrical energy to be recovered to power equipments or to be stored in batteries or other systems. At the end of the full discharge of the tanks, the concentrated water (brine) in the lower tank is separated from the carbon suspension which is now cleaned and can be re-used for water cleaning by rotating again the full cell+tanks.

In continuous mode, residence time and polarization and suspension formulation are calculated so that Na,Cl salt can be removed in one pass. If so, the process is similar to the one described in the previous paragraph.

If the water cannot be treated in one pass, at the end of the first pass, the cell is rotated and the treatment continues until the Na,Cl concentration level has been decrease to reach the desired value. Then, carbon charged with Na,Cl ions is separated from the clean water in the lower tanks and the cell is rotated to get the carbons charged with Na,Cl in in the upper tanks. A new portion of salt water is injected in the upper tanks and the tanks are connected to the second cell, where the discharge will be done in the continuous flowing mode. The energy will be recovered or stored in the same way as previously described for the batch mode.

Another example system arrangement that can be used comprises two different cells used for charging (salt removal) or discharging (salt release).

Alternatively, the cell may consist in two body- plates (positive and negative current collectors, together with separator) with 3 channels - left, right and middle. The central pipe is preferably larger than others; it merges flows of two cells - left and right, which can improve the efficiency of the treatment.

Two middle plates are designed to be electrically separated and connected to different multi cells, that can be performed as one common body (one current collector), or as one single thickened body current collector plate with flow distributing channels on both sides of the plate. Two

(respectively several) of this stack can be placed linearly - one behind another, that can increase its capacity in two (respectively several) times. This is an example of possible engineering arrangement that shows the way for building more powerful flow capacitor cell stack with higher productivity (performance).

In a preferred embodiment, the system comprises only one tank, as shown in figure 15.

This tank 90 as the two functions of an upstream and a downstream tank.

This arrangement solves the problem of difference of pressure in the anolyte and the catholyte generated in a system having two different tanks.

This difference of pressure leads to a dilution of one electrolyte (anolyte-catholyte) in the other (respectively catholyte-anolyte). Because of the unique tank, the pressure is equilibrated, and the process of removing ions (desalinization) is more efficient.

Numerous alternatives may be added without exiting from the scope of the invention. Indeed, numerous parameters may be optimized.

According to other characteristics:
- the method may comprises the steps of:
   (i) of mixing the porous active material adsorbed with ions obtained in step (h) in a second liquid electrolytic media to obtain a second mixture,
   (j) flowing the second mixture obtained in step (i) in a second cell, and
   (k) recovering some electrical energy generated by spontaneous discharge of the porous active material, via two electrodes of the second cell;
- steps (d) and (e) may be performed concomitantly to carry out a continuous removing of ions, or sequentially to carry out an intermittent removing of ions;
- the method may comprises a step (g), between step (f) and step (h), of recycling the mixture comprised in the downstream tank to the upstream tank, and of performing steps (d) to (f) until the liquid electrolytic media have an ion concentration less than or equal to a fixed threshold value.

## Claims

1. A cell adapted to remove ions from an liquid electrolytic media, comprising a housing (10) with:
• two inlets (11) and two outlets (12),
• a unique porous membrane (13, 45, 64) ionically conducting but electrically insulating, lying between the two inlets and the two outlets to constitute two compartments (14-15, 63a-65a), each one comprising one of the inlets and one of the outlets,
• two electrodes (16-17, 42-47, 62-66), each one in electronic contact with one compartment.

2. A cell according to claim 1, composed by a stack of :
• a first external silicon layer (41, 61),
• an housing constituted by:
○ a first electrode (42, 62);
○ a first compartment layer (44, 63) with at least one opening (44a, 63a) constituting, in use, a first compartment,
○ a polyvinylidene difluoride based membrane (45, 64), ionically conducting but electrically insulating,
○ a second compartment layer (46, 65) with at least one opening (46a, 65a) constituting, in use, a second compartment,
○ a second electrode (47, 66),
• a second external silicon layer (48, 67).

3. A cell according to claim 2, wherein the first electrode (42, 62) is in a material chosen in the group consisting of:
○ foils or plates or grids in Platinum, Titanium, stainless steel, stainless steel 316L, graphite, diamond, boron-doped diamond
○ expanded foils compacted with graphite, and
○ Dimensionally Stable Anodes (DSA).

4. A cell according to anyone of claim 2 or 3, wherein the compartment layers (44, 46, 63, 65) are in a material chosen in the group consisting in Polytetrafluoroethylene and Silicon; and

5. A cell according to anyone of claim 2 to 4, wherein the second electrode (47, 66) is a stainless steel 304 plate.

6. A cell according to anyone of claim 1 to 5, wherein each compartment comprises one or more channels in order to increase, during use, the contact surface between the electrodes and the liquid electrolytic media.

7. A cell according to anyone of claim 1 to 6, wherein each electrode is a metallic plate with a micro or macro structured surface in order to increase, during use, the contact surface between the electrodes and the liquid electrolytic media.

8. A cell according to anyone of claim 1 to 7, further comprising additional electronic collectors each electrically linked to one of the electrodes, selected from the group consisting of metallic grids, metal granules, spheres, rings and springs, inserted into the compartments in order to enhance, during use, the contact surface between the electrodes and the liquid electrolytic media.

9. A system to remove ions from an liquid electrolytic media, comprising:
• at least one cell according to any one of claims 1 to 8;
• at least one upstream tank (20) for the electrolytic media charged with ions and a porous active material mixed with the electrolytic media, and linked to the inlets (11) of the cell,
• at least one pump to generate a flow of the electrolytic media according to a flow direction from the upstream tank to the cell,
• at least one downstream fluidic circuit, linked to the outlets (12) of the cell, to drive the electrolytic media flowing from the cell to a downstream tank or to recycle the electrolytic media flowing from the cell towards the upstream tank,
• at least on source of electrical energy linked to the electrodes to generate an electrical current between the electrodes.

10. A system to remove ions from an liquid electrolytic media, comprising:
• at least one cell according to any one of claims 1 to 8;
• at least one upstream tank for the electrolytic media charged with ions and a porous active material mixed with the electrolytic media, and linked to the inlets of the cell,
• at least one downstream tank, linked to the outlets of the cell, to receive the electrolytic media flowing from the cell,
• at least one pump to generate a flow of the electrolytic media according to a flow direction from the upstream tank to the downstream tank through the cell,
• at least on source of electrical energy linked to the electrodes to generate an electrical current between the electrodes.

11. A system according to anyone of claim 9 or 10, wherein the cell is supported by a support.

12. A system according to anyone of claim 9 to 11, wherein the support of the cell, the upstream tank and the downstream tank are mounted on a pivotally frame, and the pump is reversible in order to reverse the flow direction.

13. A system according to anyone of claim 9 to 12, wherein the porous active material is selected from the group consisting in activated carbon, nanotubes of carbon, and Carbide Derived Carbons.

14. A method to remove ions from a liquid electrolytic media, comprising the following steps:
(a) providing a system according to anyone of claim 9 and 13;
(b) filling the upstream tank with the liquid electrolytic media;
(c) mixing free of ion porous active material with the liquid electrolytic media to obtain a mixture;
the order of steps (b) and (c) being invertible;
(d) generating a flow of the mixture from the upstream tank to the cell,
(e) applying a tension, a current or an electrical power between the two electrodes of the cell to remove ions from the liquid electrolytic media of the mixture by adsorption of the ions on the porous active material,
(f) generating a flow of the mixture from the cell to the downstream fluidic circuit,
(h) filtrating of the mixture to separate the porous active material adsorbed with ions from the liquid electrolytic media.

15. A method according to the preceding claim, further comprising the steps of (i) mixing the porous active material adsorbed with ions obtained in step (h) in a second liquid electrolytic media to obtain a second mixture, (j) flowing the second mixture obtained in step (i) in a second cell according to anyone of claim 1 to 6, and (k) recovering some electrical energy generated by spontaneous discharge of the porous active material, via two electrodes of the second cell.

16. A method according to anyone of claim 14 or 15, wherein steps (d) and (e) are performed concomitantly to carry out a continuous removing of ions, or sequentially to carry out an intermittent removing of ions.

17. A method according to anyone of claim 14 to 16, further comprising a step (g), between step (f) and step (h), of recycling the mixture comprised in the downstream tank to the upstream tank, and of performing steps (d) to (f) until the liquid electrolytic media have an ion concentration less than or equal to a fixed threshold value.

18. A method according to anyone of claim 14 to 17, wherein in step (e), the tension, the current or the electrical power is applied continuously or in a pulsed manner.
